**Europäisches Patentamt**

**European Patent Office**

**Office européen des brevets**

(19)

(11) Veröffentlichungsnummer: **0 141 123 B1**

# EUROPÄISCHE PATENTSCHRIFT

(12)

(45) Veröffentlichungstag der Patentschrift: **17.04.91**

(51) Int. Cl.5: **H03M 1/30**

(21) Anmeldenummer: **84110202.3**

(22) Anmeldetag: **28.08.84**

(54) **Lichtelektrische inkrementale Messeinrichtung.**

(30) Priorität: **23.09.83 DE 3334398**

(43) Veröffentlichungstag der Anmeldung:
**15.05.85 Patentblatt 85/20**

(45) Bekanntmachung des Hinweises auf die
Patenterteilung:
**17.04.91 Patentblatt 91/16**

(84) Benannte Vertragsstaaten:
**AT CH DE FR GB IT LI NL SE**

(56) Entgegenhaltungen:
**DE-B- 2 706 926**
**GB-A- 2 067 282**

**Machine Shop Magazine, April 1962, Seiten
202-213**

(73) Patentinhaber: **Dr. Johannes Heidenhain
GmbH
Dr.-Johannes-Heidenhain-Strasse 5 Postfach
1260
W-8225 Traunreut(DE)**

(72) Erfinder: **Nelle, Günther, Dr.-Ing.
Eichenweg 12
W-8221 Bergen(DE)**

## Beschreibung

Die Erfindung betrifft eine lichtelektrische inkrementale Meßeinrichtung gemäß dem Oberbegriff des Anspruchs 1.

Bei einer derartigen Meßeinrichtung können die durch die Referenzmarken erzeugten elektrischen Steuerimpulse auf verschiedene Weise verwertet werden, z.B. zum Reproduzieren der Nullposition im Zähler, zum Anfahren einer bestimmten Position zu Beginn der Messung und zur Meßwertüberwachung vor Störimpulsen sowie zur Beaufschlagung einer nachgeschalteten Steuereinrichtung.

In der DE-C- 29 52 106 ist eine inkrementale Längen-oder Winkelmeßeinrichtung beschrieben, bei der auf einem Maßstab neben der Teilung Referenzmarken mit jeweils unterschiedlichen Strichgruppenverteilungen vorgesehen sind. Die einzelnen Referenzmarken werden von Abtastfeldern auf einer Abtastplatte in einer Abtasteinheit abgetastet, wobei jedes Abtastfeld einer Referenzmarke eindeutig zugeordnet ist, indem es die gleiche Strichgruppenverteilung aufweist Zur eindeutigen Abtastung dieser Referenzmarken dar wegen der unregelmäßigen Strichgruppenverteilungen der Abstand zwischen dem Maßstab und der Abtastplatte höchstens etwa $2d^2/\lambda$ betragen, wobei d die Breite des schmalsten Striches der Strichteilung der Referenzmarken und $\lambda$ die Schwerpunktwellenlänge des Lichts bedeuten.

Weiter ist bekannt, daß zum Abtasten einer regelmäßigen periodischen inkrementalen Teilung eines Maßstabs nicht nur ein einziger bestimmter Abstand zwischen dem Maßstab und der Abtastplatte eingehalten werden muß, sondern daß verschieden große Abstände möglich sind. Wird die Teilung eines Maßstabs von Licht mit parallelem Strahlengang durchsetzt, so entstehen in bestimmten Ebenen hinter der Teilungsebene des Maßstab durch Interferenzen der an der Teilung des Maßstabs gebeugten Lichtstrahlen Beugungsbilder der Teilung des Maßstabs, die mit Abtastteilungen gleicher Gitterkonstante abgetastet werden können. Diese Ebenen haben bei einer Gitterkonstanten $P_M$ der Teilung des Maßstabs und einer Schwerpunktwellenlänge $\lambda$ des Lichts Abstände $n \cdot p_M^2/\lambda$ (n = 0, 1, 2 ...) von der Teilungsebene des Maßstabs. Optimale elektrische Abtastsignale können daher bei Abständen $n \cdot P_M^2/\lambda$ der Teilungsebene der Abtastplatte von der Teilungsebene des Maßstabs erzeugt werden (Machine Shop Magazine, April 1962, Seite 208). Das Vorsehen größerer Abstände zwischen dem Maßstab und der Abtastplatte besitzt den Vorteil, daß die Abstandstoleranzen bei diesen größeren Abständen oft großer sind, so daß an die Führungsgenauigkeit der Abtastplatte bezüglich des Maßstabs geringere Anforderungen gestellt werden müssen. Ferner besitzen bei größeren Abständen auch die bei der Abtastung der inkrementalen Teilung des Maßstabs erzeugten periodischen Abtastsignale eine sinusförmigere Signalform, so daß sich die Signalperiode der Abtastsignale zur Interpolation besser unterteilen läßt.

Die Ausnutzung sehr großer Abstände zwischen Maßstab und Abtastplatte bei der Abtastung der inkrementalen Teilung ist ohne zwischengeschaltete Abbildungsoptik nur bei Meßeinrichtungen möglich deren Maßstab keine Referenzmarken aufweist, da zur eindeutigen Abtastung der Referenzmarken, wie ober dargelegt, ein bestimmter geringer Abstand zwischen dem Maßstab und der Abtastplatte nicht überschritten werden darf.

Der Erfindung liegt die Aufgabe zugrunde, bei einer lichtelektrischen inkrementalen Meßeinrichtung mit auf einem Maßstab vorgesehenen Referenzmarken eine eindeutige Abtastung der Referenzmarken und eine optimale Abtastung der Teilung des Maßstabs zu ermöglichen.

Diese Aufgabe wird erfindungsgemäß durch die kennzeichnenden Merkmale des Anspruchs 1 gelöst.

Die mit der Erfindung erzielten Vorteile bestehen insbesondere darin, daß bei einer Meßeinrichtung der oben erwähnten Gattung durch das Vorsehen eigener Abtastplatten für die Teilung und die Referenzmarken des Maßstabs mit separaten Führungen die jeweils benötigten günstigsten Abstände zur sicheren Abtastung der inkrementalen Teilung und der Referenzmarken des Maßstabs eingestellt werden können, so daß die Meßgenauigkeit und der Unterteilungsgrad bei einer Interpolation der Meßwerte sich erhöhen. Durch das Vorsehen größerer Abstände zwischen der Teilung des Maßstabs und den zugehörigen Abtastfeldern der ersten Abtastplatte können an die Führungsgenauigkeit dieser Abtastplatte bezüglich des Maßstabs geringere Anforderungen gestellt werden, da bei diesen größeren Abständen oft auch die Abstandstoleranzen zunehmen. Es brauchen somit bei einer derartigen Meßeinrichtung, bei der ein bestimmter geringer Abstand zwischen den Referenzmarken und den zugehörigen Abtastfeldern nicht überschritten werden darf, keine hochgenauen Führungen für die erste Abtastplatte zur Abtastung der Teilung des Maßstabs vorgesehen sein. Da die erste Abtastplatte nicht an der Hilfsführung für die zweite Abtastplatte geführt ist, entstehen keine Meßfehler durch Umkehrspannen, die bei einer reibungsbehafteten Führung an der Hilfsführung zwangsläufig auftreten. Die vorgeschlagenen einfachen Maßnahmen haben keine Änderungen der Außenabmessungen zur Folge, so daß die Flexibilität des Einsatzes der Meßeinrichtung an Maschinen erhalten bleibt.

Vorteilhafte Weiterbildungen der Erfindung entnimmt man den Unteransprüchen.

Ausführungsbeispiele der Erfindung werden anhand der Zeichnung näher erläutert.

Es zeigen

Figur 1    schematisch eine inkrementale Meßeinrichtung,

Figur 2    einen Maßstab mit Referenzmarken,

Figur 3    zwei Abtastplatten mit Abtastfeldern,

Figur 4    eine graphische Darstellung der Amplituden der Lichtmodulation,

Figur 5    eine gekapselte inkrementale Meßeinrichtung im Querschnitt und

Figur 6    eine schematische Anordnung von Maßstab und Abtastplatten im Querschnitt.

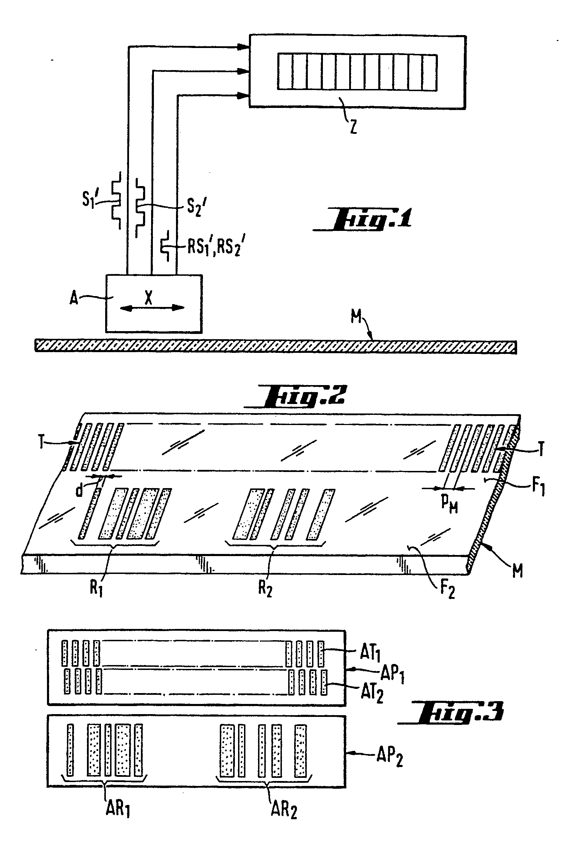

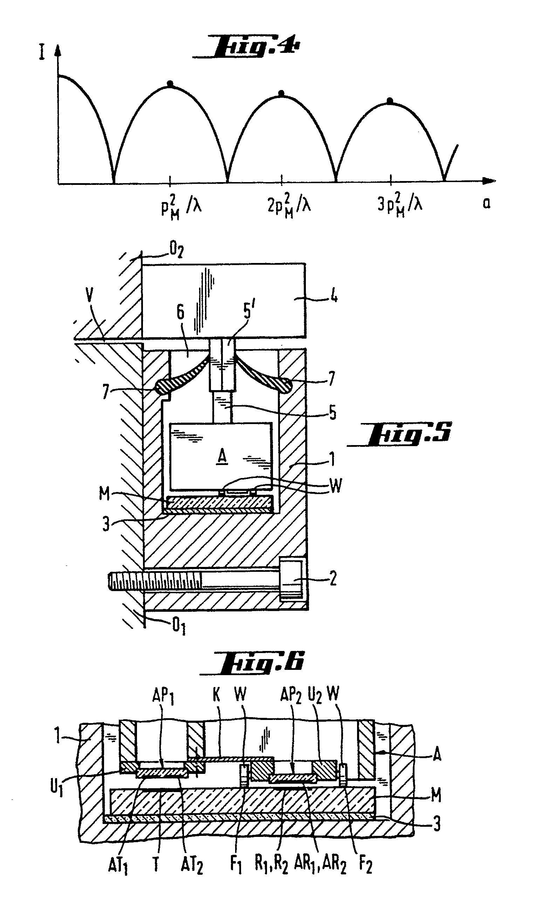

In Figur 1 ist schematisch eine lichtelektrische inkrementale Längenmeßeinrichtung gezeigt, die aus einem Maßstab M und aus einer Abtasteinheit A besteht, die jeweils mit zu messenden Objekten $O_1$, $O_2$ in Form von Maschinenteilen einer Bearbeitungsmaschine verbunden sind (Figur 5). Auf dem Maßstab M ist eine inkrementale Teilung T in Form eines Strichgitters (Figur 2) aufgebracht, die im Auflicht photoelektrisch von der Abtasteinheit A abgetastet wird. Neben der Teilung T sind zwei Referenzmarken $R_1$, $R_2$ angeordnet, die der Teilung T absolut zugeordnet sind und jeweils aus einer Gruppe von Strichen mit einer unregelmäßigen Strichverteilung bestehen; die Strichgruppenverteilungen der beiden Referenzmarken $R_1$, $R_2$ müssen einander möglichst unähnlich sein.

Die durch die Abtastung der Teilung T mittels der in Meßrichtung X verschiebbaren Abtasteinheit A erzeugten periodischen Abtastsignale $S_1$, $S_2$, die in der Abtasteinheit A verstärkt und in Rechtecksignale $S_1'$, $S_2'$ umgeformt werden, steuern einen elektronischen Zähler Z, der die Meßwerte in digitaler Form anzeigt. Die um ein Viertel der Gitterkonstanten $P_M$ (Teilungsperiode) der Teilung T zueinander verschobenen Rechtecksignale $S_1'$, $S_2'$ dienen der Diskriminierung der Abtastrichtung. Die an den Referenzmarken $R_1$, $R_2$ erzeugten Referenzsignale $RS_1$ $RS_2$ werden ebenfalls in der Abtasteinheit A verstärkt, in Rechtecksignale $RS_1'$, $RS_2'$ umgeformt und ebenfalls dem Zähler Z zugeführt.

Mit den gewonnenen Referenzsignalen $RS_1$, $RS_2$ können verschiedene Funktionen ausgelöst werden. Durch Auswertung der Referenzsignale $RS_1$, $RS_2$ wird beispielsweise aus einer inkrementalen Meßeinrichtung eine quasi absolute Meßeinrichtung, wenn jeder Referenzmarke $R_1$, $R_2$ eine Zahl zugeordnet wird, die deren absolute Position, bezogen auf einen unveränderlichen Nullpunkt, darstellt. Ferner kann eine bestimmte Referenzmarke $R_1$, $R_2$ dazu dienen, den Zähler Z beim Auftreten des aus der bestimmten Referenzmarke $R_1$, $R_2$ gewonnenen Referenzsignals $RS_1$, $RS_2$ auf den Wert "Null" zu setzen.

Zur Abtastung der Teilung T des Maßstabs M ist in der Abtasteinheit A eine erste Abtastplatte $AP_1$ nach Figur 3 vorgesehen, die zwei um ein Viertel der Gitterkonstanten $P_M$ der Teilung T zueinander versetzte Abtastfelder $AT_1$, $AT_2$ aufweist, die mit der Teilung T identisch sind; den Abtastfeldern $AT_1$, $AT_2$ sind nicht gezeigte Photoelemente in der Abtasteinheit A zur Erzeugung der Abtastsignale $S_1$, $S_2$ zugeordnet. Zur Abtastung der Referenzmarken $R_1$, $R_2$ ist in der Abtasteinheit A eine zweite Abtastplatte $AP_2$ mit Abtastfelder $AR_1$, $AR_2$ vorgesehen; die Strichgruppenverteilungen der einzelnen Abtastfelder $AR_1$, $AR_2$ sind mit den Strichgruppenverteilungen der zugehörigen Referenzmarken $R_1$, $R_2$ identisch, so daß bei Deckung von Referenzmarke $R_1$, $R_2$ und zugehörigem Abtastfeld $AR_1$, $AR_2$ die Referenzsignale $RS_1$, $RS_2$ hervorgerufen werden. Durch die Identität der Strichverteilungen von Referenzmarke $R_1$ und Abtastfeld $AR_1$ bzw. der Strichverteilungen von Referenzmarke $R_2$ und Abtastfeld $AR_2$ ist sichergestellt, daß nur das zur jeweiligen Referenzmarke $R_1$, $R_2$ zugehörige Abtastfeld $AR_1$, $AR_2$ ein Referenzsignal $RS_1$, $RS_2$ mit ausreichend großem Nutz-/Störsignalverhältnis hervorbringen kann. Wird beispielsweise das Abtastfeld $AR_1$ an der nichtzugehörigen Referenzmarke $R_2$ vorbeibewegt, kann kein Referenzsignal hervorgerufen werden.

Wird die periodische inkrementale Teilung T des Maßstabs M von parallelem Licht durchsetzt, so entstehen in bestimmten Ebenen hinter der Ebene der Teilung T des Maßstabs M durch Interferenzen der an der Teilung T des Maßstabs M gebeugten Lichtstrahlen Beugungsbilder der Teilung T des Maßstabs M. Diese Ebenen haben bei der Gitterkonstanten $P_M$ der Teilung T des Maßstabs M und einer Schwerpunktwellenlänge $\lambda$ des Lichts Abstände $n \cdot P_M^2/\lambda$ ($n = 0,1,2...$) von der Ebene der Teilung T des Maßstabs M. In Figur 4 sind die Amplituden I der bei einer Relativbewegung zwischen zwei Teilungen gleicher Gitterkonstante auftretenden Lichtmodulation in Abhängigkeit vom gegenseitigen Abstand a dargestellt. Optimale elektrische Abtastsignale $S_1$, $S_2$ werden daher nur beim Abstand $n \cdot P_M^2/\lambda$ der Ebene der Abtastfelder $AT_1$, $AT_2$ der ersten Abtastplatte $AP_1$ von der Ebene der Teilung T des Maßstabs M erzeugt.

Zur eindeutigen Abtastung der Referenzmarken $R_1$, $R_2$ auf dem Maßstab M darf wegen ihrer unregelmäßigen Strichgruppenverteilung der Abstand zwischen den Referenzmarken $R_1$, $R_2$ und den zugehörigen Abtastfeldern $AR_1$, $AR_2$ auf der zweiten Abtastplatte $AP_2$ in Lichtstrahlenrichtung höchstens etwa $2d^2/\lambda$ betragen, wobei d die Breite des schmalsten Striches der Strichteilungen der Referenzmarken $R_1$, $R_2$ bedeutet. Dagegen muß zur optimalen Abtastung der Teilung T des Maßstabs M der Abstand zwischen der Teilung T und den

zugehörigen Abtastfeldern AT$_1$, AT$_2$ auf der ersten Abtastplatte AP$_1$ in Lichtstrahlenrichtung etwa n • P$_M^2$/λ (n = 1,2,3...) betragen.

Erfindungsgemäß wird daher vorgeschlagen, daß die erste Abtastplatte AP$_1$ mit den Abtastfeldern AT$_1$, AT$_2$ für die Teilung T des Maßstabs M fest in der Abtasteinheit A angeordnet ist, die an einer Führung V der zu messenden Objekte O$_1$, O$_2$ verschiebbar ist, und daß die zweite Abtastplatte AP$_2$ mit den Abtastfeldern AR$_1$, AR$_2$ für die Referenzmarken R$_1$, R$_2$ an einer von der Führung V der zu messenden Objekte O$_1$, O$_2$ unabhängigen Hilfsführung verschiebbar und mit der ersten Abtastplatte AP$_1$ über eine in Meßrichtung X steife Kupplung K verbunden ist.

In Figur 5 ist ein inkrementale gekapselte Meßeinrichtung im Querschnitt dargestellt, bei der ein Gehäuse 1 in Form eines Hohlprofils mittels einer Schraube 2 an dem einem zu messenden Objekt O$_1$ in Form eines Schlittens einer nicht gezeigten Bearbeitungsmaschine befestigt ist. Im Inneren des Gehäuses 1 ist mittels einer Klebeschicht 3 der Maßstab M befestigt, der von der Abtasteinheit A abgetastet wird. An dem anderen zu messenden Objekt O$_2$ in Form eines Betts der Bearbeitungsmaschine ist ein Montagefuß 4 in beliebiger Weise befestigt, der über einen Mitnehmer 5 mit der Abtasteinheit A verbunden ist. Das Gehäuse 1 weist einen in Längserstreckung verlaufenden Schlitz 6 auf, der durch Dichtlippen 7 verschlossen ist, durch die der Mitnehmer 5 mit einem schwertförmigen Bereich 5' hindurchgreift. Die über den Mitnehmer 5 und den Montagefuß 4 starr mit dem zu messenden Objekt O$_2$ verbundene Abtasteinheit A ist an der Führung V der zu messenden Objekte O$_1$, O$_2$ in Meßrichtung X verschiebbar.

In Figur 6 ist als Ausschnitt der Figur 5 der mittels der Klebeschicht 3 im Gehäuse 1 befestigte Maßstab M gezeigt, der von der Abtasteinheit A abgetastet wird. Die erste Abtastplatte AP$_1$ mit den Abtastfeldern AT$_1$, AT$_2$ zur Abtastung der Teilung T des Maßstabs M ist mittels eines Rahmens U$_1$ fest in der Abtasteinheit A angeordnet, die gemäß Figur 5 an der Führung V der zu messenden Objekte O$_1$, O$_2$ in Meßrichtung X verschiebbar ist. Die zweite Abtastplatte AP$_2$ mit den Abtastfeldern AR$_1$, AR$_2$ zur Abtastung der Referenzmarken R$_1$, R$_2$ ist in einem Rahmen U$_2$ angeordnet, der über eine sich quer zur Meßrichtung X erstreckende Blattfeder K mit der Abtasteinheit A oder dem Rahmen U$_1$ der ersten Abtastplatte AP$_1$ verbunden ist; diese Blattfeder K stellt die in Meßrichtung X steife Kupplung zwischen der ersten Abtastplatte AP$_1$ und der zweiten Abtastplatte AP$_2$ dar. Am Rahmen U$_2$ der zweiten Abtastplatte AP$_2$ sind Rollen W angeordnet, die auf Führungsflächen F$_1$, F$_2$ des Maßstabs M geführt sind; diese Führungsflächen F$_1$, F$_2$ auf dem Maßstab M stellen die von der Führung V der zu messenden Objekte O$_1$, O$_2$ unabhängige Hilfsführung für die zweite Abtastplatte AP$_2$ dar. Diese Kupplung K in Form der Blattfeder dient gleichzeitig als Andruckelement für die zweite Abtastplatte AP$_2$ an die Führungsfläche F$_1$, F$_2$ des Maßstabs M, so daß stets ein bestimmter Abstand zwischen den Referenzmarken R$_1$, R$_2$ und den zugehörigen Abtastfeldern AR$_1$, AR$_2$ gewährleistet ist. Die Führungsflächen für die zweite Abtastplatte AP$_2$ können in nicht gezeigter Weise am Maßstab M und/oder am Gehäuse 1 für den Maßstab M vorgesehen sein. In der Abtasteinheit A sind zur photoelektrischen Abtastung des Maßstabs M in nicht dargestellter bekannter Weise eine Beleuchtungseinrichtung sowie den Abtastfeldern AT$_1$, AT$_2$, AR$_1$, AR$_2$ zugeordnete Photoelemente vorgesehen.

Die Erfindung erlaubt somit die Abtastung der Teilung T des Maßstabs M mit größeren Abständen und größeren Abstandstoleranzen für die erste Abtastplatte AP$_1$ und die Abtastung der Referenzmarken R$_1$, R$_2$ mit geringerem Abstand und geringerer Abstandstoleranz für die zweite Abtastplatte AP$_2$ und läßt sich mit besonderem Vorteil auch bei anderen Meßverfahren einsetzen, bei denen die Teilungen des Maßstabs und der Abtastfelder der Ab tastplatte nicht identisch sind, beispielsweise bei einem Dreigitter-Meßverfahren, bei dem die Teilung des Abtastfeldes doppelt so groß wie die Teilung des Maßstabs ist. Bei derartigen Dreigittermeßverfahren (DE-A- 25 11 350) mit nichtparallelem Strahlengang lassen sich sehr große Abstände mit relativ großen Abstandstoleranzen erzielen.

**Ansprüche**

1. Lichtelektrische inkrementale Meßeinrichtung zur Messung der Relativlage zweier Objekte (O$_1$, O$_2$) mit entlang der Teilung (T) eines Maßstabs (M) in Meßrichtung X vorgesehenen Referenzmarken (R$_1$, R$_2$), die der Teilung (T) absolut zugeordnet sind und an denen im Zusammenwirken mit einer Abtasteinheit (A) reproduzierbare elektrische Impulse (RS$_1$', RS$_2$') erzeugt werden, die einen Zähler (Z) der Meßeinrichtung und/oder eine Steuereinrichtung beaufschlagen, und mit Abtastfeldern (AT$_1$, AT$_2$, AR$_1$, AR$_2$) in der Abtasteinheit (A) zur Abtastung der Teilung (T) des Maßstabs (M) und der Referenzmarken (R$_1$, R$_2$), dadurch gekennzeichnet, daß eine erste Abtastplatte (AP$_1$) mit den Abtastfeldern (AT$_1$, AT$_2$) für die Teilung (T) des Maßstabs (M) fest in der Abtasteinheit (A) angeordnet ist, die an einer Führung (V) der zu messenden Objekte (O$_1$, O$_2$) verschiebbar ist, daß eine zweite Abtastplatte (AP₂) mit den Abtastfeldern (AR₁, AR₂) für die Referenzmarken (R₁, R₂) an einer von der Führung (V) der zu messenden Objekte (O₁, O₂) unabhängigen Hilfsführung verschiebbar und mit der ersten Abtastplatte (AP₁) über eine in Meßrichtung X steife Kupplung (K) verbunden ist und daß der Abstand zwischen der Teilung (T) und den zugehörigen Abtastfeldern (AT₁, AT₂) sich vom Abstand zwischen den Referenzmarken (R₁, R₂) und den zugehörigen Abtastfeldern (AR₁, AR₂) unterscheidet.

2. Meßeinrichtung nach Anspruch 1, dadurch gekennzeichnet, daß die Kupplung (K) durch eine quer zur Meßrichtung X verlaufende Blattfeder gebildet ist.

3. Meßeinrichtung nach den Ansprüchen 1 und 2, dadurch gekennzeichnet, daß die Kupplung (K) gleichzeitig als Andruckelement für die zweite Abtastplatte (AP₂) an Führungsflächen (F₁, F₂) der Hilfsführung dient.

4. Meßeinrichtung nach Anspruch 3, dadurch gekennzeichnet, daß die Führungsflächen (F₁, F₂) der Hilfsführung vom Maßstab (M) und/oder von einem Träger (1) für den Maßstab (M) gebildet werden.

5. Meßeinrichtung nach Anspruch 3, dadurch gekennzeichnet, daß sich die zweite Abtastplatte (AP₂) über Rollen (W) an den Führungsflächen (F₁, F₂) der Hilfsführung abstützt.

fields (AR₁, AR₂,) for the reference marks (R₁, R₂) is displaceable on an auxiliary guide independent of the guide (V) of the objects (O₁, O₂,) to be measured and is coupled to the first sensing plate (AP₁) through a coupling (K) stiff in the measuring direction X and in that the distance between the graduation (T) and the associated sensing fields (AT₁, AT₂) is different from the distance between the reference marks (R₁, R₂) and the associated sensing fields (AR₁, AR₂).

2. Measuring device according to claim 1, characterized in that the coupling (K) is formed by a leaf spring running transverse to the measuring direction X.

3. Measuring device according to claims 1 and 2, characterized in that the coupling (K) simultaneously serves as a pressure element for the second sensing plate (AP₂) on guide surfaces (F₁, F₂) of the auxiliary guide.

4. Measuring device according to claim 3, characterized in that the guide surfaces (F₁, F₂) of the auxiliary guide are formed from the measuring scale (M) and/or from a support (1) for the measuring scale (M).

5. Measuring device according to claim 3, characterized in that the second sensing plate (AP₁) is supported by rollers (W) on the guide surfaces (F₁, F₂) of the auxiliary guide.

## Claims

1. Photoelectric incremental measuring device for measuring the relative position of two objects (O₁, O₂), with reference marks (R₁, R₂,) provided along the graduation (T) of a measuring scale (M) in the measuring direction X, which marks are absolutely associated with the graduation (T) and at which reproducible electrical pulses (RS₁', RS₂') are generated in cooperation with a sensing unit (A), which pulses act on a counter (Z) of the measuring device and/or a control device, and with sensing fields (AT₁, AT₂, AR₁, AR₂) in the sensing unit (A) for sensing the graduation (T) of the measuring scale (M) and the reference marks (R₁, R₂), characterized in that a first sensing plate (AP₁) with the sensing fields (AT₁, AT₂) for the graduation (T) of the measuring scale (M) is arranged fixedly in the sensing unit (A), which is displaceable on a guide (V) of the objects (O₁, O₂) to be measured, in that a second sensing plate (AP₂) with the sensing

## Revendications

1. Dispositif de mesure incrémental photoélectrique pour la mesure de la position relative de deux objets (O₁, O₂) comportant des repères de référence (R₁, R₂) prévus le long de la graduation (T) d'une règle (M) dans la direction de mesure X, repères qui sont associés de manière absolue à la graduation (T), et à partir desquels sont produites, en coopération avec une unité de lecture (A), des impulsions (RS₁', RS₂') électriques reproductibles, qui sont envoyées à un compteur (Z) du dispositif de mesure et/ou à une unité de commande, et des champs de lecture (AT₁, AT₂, AR₁, AR₂) dans l'unité de lecture (A), pour la lecture de la graduation (T) de la règle (M) et des repères de référence (R₁, R₂), caractérisé en ce qu'une première plaque de lecture (AP₁) comportant les champs de lecture (AT₁, AT₂) pour la graduation (T) de la règle (M), est montée fixement dans l'unité de mesure (A), qui peut être déplacée le long d'un guidage (V) des objets à

mesurer ($O_1$, $O_2$), en ce qu'une deuxième plaque de lecture ($AP_2$), comportant les champs de lecture ($AR_1$, $AR_2$) pour les repères de référence ($R_1$, $R_2$), peut être déplacée le long d'un guidage secondaire, indépendant du guidage (V) des objets à mesurer ($O_1$, $O_2$), et est reliée à la première plaque de lecture ($AP_1$) au moyen d'un accouplement (K), rigide dans la direction de mesure (X), et en ce que la distance entre la graduation (T) et les champs de lecture ($AT_1$, $AT_2$) correspondants est différente de la distance entre les repères de référence ($R_1$, $R_2$) et les champs de lecture ($AR_1$, $AR_2$) correspondants.

2. Dispositif de mesure selon la revendication 1, *caractérisé* en ce que l'accouplement (K) est formé d'un ressort à lame disposé transversalement par rapport à la direction de mesure (X).

3. Dispositif de mesure selon les revendications 1 et 2, *caractérisé* en ce que l'accouplement (K) sert simultanément d'élément presseur pour la deuxième plaque de lecture ($AP_2$) sur les surfaces de guidage ($F_1$, $F_2$) du guidage secondaire.

4. Dispositif de mesure selon la revendication 3, *caractérisé* en ce que les surfaces de guidage ($F_1$. $F_2$) du guidage secondaire sont formées par la règle (M) et/ou par un support (1) de la règle (M).

5. Dispositif selon la revendication 3, *caractérisé* en ce que la deuxième plaque de lecture ($AP_2$) prend appui sur les surfaces de guidage ($F_1$, $F_2$) du guidage secondaire par l'intermédiaire de galets (w).

Fig.1

Fig.2

Fig.3

Fig.4

Fig.5

Fig.6